# EUROPEAN PATENT APPLICATION

(11) **EP 2 666 693 A2**
(43) Date of publication of application: **27.11.2013**
(21) Application number: 13167660.3
(22) Date of filing: 14.05.2013
(51) Int. Cl.: B60W 50/08, B60W 40/08

(54) **Dialogue apparatus, dialogue system, and dialogue control method**

(30) Priority: 22.05.2012 JP 2012116493
(71) Applicant: Clarion Co., Ltd., Saitama 330-0081 (JP)
(72) Inventor: Matsumoto, Takashi, Chiyoda-ku, Tokyo 100-8220 (JP); Nagai, Yasushi, Chiyoda-ku, Tokyo 100-8220 (JP); Miyamoto, Yo, Chiyoda-ku, Tokyo 100-8220 (JP); Ishii, Takaaki, Chiyoda-ku, Tokyo 100-8220 (JP); Horibe, Yasuki, Saitama-shi, Saitama 330-0081 (JP); Harada, Tomohiro, Saitama-shi, Saitama 330-0081 (JP)
(74) Representative: Moore, Graeme Patrick

(57) **Abstract**

The invention relates to enabling implementation of dialogue of content effective to improve the degree of concentration of the driver to driving. Basically, driver concentration is measured, and the invention selects a dialogue candidate depending on dirver concentration. These candidates are stored in a storage unit having a preference database which associates dialogue candidates and a dialogue effect, namely improving the driver's concentration.

## Description

### BACKGROUND OF THE INVENTION

### Field of the Invention

The present invention relates to a system for carrying out a dialogue with a driver in a vehicle such as a car navigation system or the like.

### Description of the Related Art

Recently, traffic accidents caused by drivers who lack attention because the drivers feel annoyed, are in a great hurry, feel drowsy, are lost in thought, or the like have been increasing. Further, traffic accidents caused by inattentive driving by drivers who are operating cellular telephones have also been increasing. When the driver is not concentrating on driving such as rambling driving or inattentive driving, the driver tends to break traffic regulations such as running a red light or speeding or tends to delay in determining driving operations, which lead traffic accidents.

To address such problems, driving support methods are known which call driver's attention when the driver is not concentrating on driving (see Japanese Patent Laid-Open No. 2008-250775, Japanese Patent Laid-Open No. 2006-350567).

The technique disclosed by Japanese Patent Laid-Open No. 2008-250775 acquires an operation situation of a vehicle from operation information of the break of the vehicle, a distance from the leading vehicle, operation information of steering wheel, and speed information. At the same time, the technique acquires the eyes behavior of the driver from a face image of the driver taken with a camera and creates a gaze information distribution pattern of the driver within a predetermined time period. Subsequently, the technique estimates the driver's degree of concentration on driving based on the acquired operation situation of the vehicle and the created gaze information distribution patterns. When the operation situation of the vehicle fulfills a predetermined condition indicating a need of calling attention, the technique calls attention of the driver according to the estimation result of the driver's degree of concentration on driving.

There are correlations between the operation situation of the vehicle and the gaze information distribution pattern such that the gaze information tends to move leftward in the case of left-turn and the gaze information tends to move upward and downward to check meters such as a speedometer in the case of driving straight. Based on the correlation, the gaze information distribution pattern to be a reference according to the operation situation of the vehicle can be decided. For example, when a lateral gaze information distribution pattern is recognized which differs from the gaze information distribution pattern of the reference, inattentive driving is estimated. When it is estimated that the degree of concentration is low by comparing the gaze information distribution pattern of reference with the practical gaze information distribution pattern of the driver to estimate the driver's degree of concentration on driving, attention is called.

On the other hand, the technique disclosed by Japanese Patent Laid-Open No. 2006-350567 has a function of leading the driver toward more safe driving habits in addition to a function of calling the driver's attention.

The technique acquires information on vehicle behavior such as speed, longitudinal acceleration, lateral acceleration, and yaw, and information on environment of the vehicle such as running environment, presence or absence of pedestrian, traffic of motorcycle based on a normative model of driving operation, and based on these types of information, determines whether the driver's driving operation is in a safe driving habit or not. When the difference between the driver's driving operation and the normative model is big, it is determined that the driver's driving operation is not in a safe tendency, then, a driving advice is provided for the driver via a dialogue function including a voice synthesis function and a voice recognition function.

After providing the driving advice, the technique determines whether the driver follows the driving advice or not based on the operation situation of the vehicle, the estimation result of the driver's state of mind based on image recognition or the like, and the voice recognition result of contents of the driver's response. When the driver does not follow the driving advice, the technique changes a method of expressing the driving advice such as changing sound volume or timing to provide the driving advice. When the driver follows the driving advice, the technique stores the method of expressing the driving advice to use the method from the next driving advice. With the sequence of processing, the technique realizes a driving advice system for leading the driver toward more safe driving habit.

However, when the technique of Japanese Patent Laid-Open No. 2008-250775 calls the driver's attention, it does not take account of how much the driver has followed the driving support attention calling, therefore, the attention calling does not effectively work in some cases. For example, when the driver does not follow the attention calling, the technique keeps providing attention calling with the same content, which may further decrease the driver's degree of concentration on driving such as annoying the driver. Further, the driver may disable the driving support function to relieve the annoyance.

The technique of Japanese Patent Laid-Open No. 2006-350567 reflects the driver's response to the driving advice on the method of expressing the driving advice such as sound volume or timing to provide the driving advice. However, the contents of the driving advice are not changed by the driver's response. Therefore, even if the driver's degree of concentration on driving is not improved by some contents of the driving advice, the same driving advice is repeated, and therefore, the attention calling may not effectively work. For example, since the repetition of the driving advice of the same content causes the driver to be accustomed to the driving advice, the driver's degree of concentration on driving may not be improved by the driving advice.

An object of the present invention is to provide a technique of enabling implementation of dialogue of content effective to improve the degree of concentration of the driver to driving.

### SUMMARY OF THE INVENTION

The dialogue apparatus according to an aspect of the present invention is a dialogue apparatus configured to carry out a dialogue with a driver who is driving a vehicle, including: a storage unit configured to maintain a preference database in which a dialogue candidate to be a candidate of content for a dialogue with the driver and a dialogue effect indicating a degree of improving the driver's degree of concentration on driving due to a dialogue by the dialogue candidate are associated with each other; a concentration degree measuring unit configured to measure the driver's degree of concentration on driving; and a dialogue unit configured to select a dialogue candidate based on the dialogue effect in the preference database when the degree of concentration measured by the concentration degree measuring unit falls below a predetermined threshold, and then, carry out a dialogue by the selected dialogue candidate, and based on the degree of concentration before carrying out the dialogue and after carrying out the dialogue, calculate the dialogue effect of the dialogue, and update the dialogue effect of the preference database.

The above and other objects, features, and advantages of the present invention will become apparent from the following description with references to the accompanying drawings which illustrate examples of the present invention.

### BRIEF DESCRIPTION OF THE DRAWINGS

FIG. 1 is a block diagram illustrating a function configuration of a dialogue apparatus according to the embodiment;
FIG. 2 is a block diagram of an overall system according to a first example;
FIG. 3 is a block diagram of a concentration degree measuring unit 200 according to the first example;
FIG. 4 is a block diagram of a general dialogue function device;
FIG. 5 is a flow chart describing an operation example of a dialogue function device 300 according to the first example;
FIG. 6 is a block diagram illustrating a basic configuration example of a dialogue unit 500 according to the first example;
FIG. 7 is a diagram illustrating a configuration example of a preference database 140 according to the first example;
FIG. 8 is a diagram illustrating a configuration example of a dialogue content database 540 according to the first example;
FIG. 9 is a flow chart describing a processing example of a dialogue effect maintenance unit 520 and a dialogue control unit 510 according to an example;
FIG. 10 is a block diagram of an in-vehicle terminal according to a second example;
FIG. 11 is a flow chart describing an operation of the in-vehicle terminal which enables a dialogue request reception by a service function of the in-vehicle terminal according to the second example;
FIG. 12 is a block diagram of an overall system according to a third example;
FIG. 13 is a block diagram of a terminal side dialogue unit 1100 according to the third example;
FIG. 14 is a block diagram of a server side dialogue unit 1130 according to the third example;
FIG. 15 is a flow chart describing an operation of the terminal side dialogue unit 1100 according to the third example;
FIG. 16 is a flow chart describing a dialogue processing example in the server side dialogue unit 1130 described in step S1420 of FIG. 15; and
FIG. 17 is a flow chart describing a determination processing example of an improvement effect on degree of concentration in the server side dialogue unit 1130 described in step S1450 of FIG. 15.

### DETAILED DESCRIPTION OF THE PREFERRED EMBODIMENTS

First, a basic embodiment of the present invention will be described with reference to the drawings.

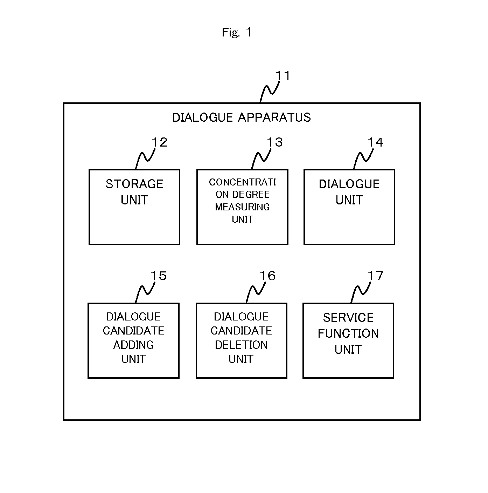

FIG. 1 is a block diagram illustrating a function configuration of a dialogue apparatus according to the embodiment. A dialogue apparatus 11 has a storage unit 12, a concentration degree measuring unit 13, a dialogue unit 14, a dialogue candidate addition unit 15, a dialogue candidate deletion unit 16, and a service function unit 17.

The dialogue apparatus 11 is a car navigation device equipped to a vehicle such as an automobile, for example, and provides a service function of route guidance to a destination, while carrying out a dialogue with a driver who is driving the vehicle. The dialogue described here includes a dialogue related to the service function and a dialogue for improving the degree of concentration of the driver.

The storage unit 12 maintains a preference database in which a dialogue candidate to be a candidate of content for a dialogue with the driver and a dialogue effect indicating a degree of improving the driver's degree of concentration on driving due to a dialogue by the dialogue candidate are associated with each other.

The concentration degree measuring unit 13 measures the driver's degree of concentration on driving. The measuring method is not specifically limited and any conventional methods may be used.

The dialogue unit 14 selects a suitable dialogue candidate based on the dialogue effect in the preference database maintained in the storage unit 12 when the degree of concentration measured by the concentration degree measuring unit 13 falls below a predetermined threshold, and then, carries out a dialogue with the driver via the selected dialogue candidate. Then, the dialogue unit 14 calculates the dialogue effect of the carried out dialogue based on the degree of concentration before carrying out the dialogue and after carrying out the dialogue measured by the concentration degree measuring unit 13, and updates the dialogue effect saved in the preference database.

As described above, according to the embodiment, since a dialogue highly effective in improving the degree of concentration of the driver is selected and carried out and the preference database is updated with the result of the dialogue as required, the dialogue of content effective in improving the driver's degree of concentration on driving can be carried out.

Further, in the embodiment, the service function unit 17 provides various service functions to the driver. The types of the service function include route guidance and music playback, for example. The classification (dialogue classification) is given to each dialogue candidate recorded in the preference database. That is, in the preference database, dialogue classifications and dialogue effects are recorded with respect to a plurality of dialogue candidates. For some of the dialogue classifications, the dialogue effect differs depending on the operating state of the service function unit 17. For example, the dialogue with music related content as the dialogue classification may be effective in improving the degree of concentration of the driver to be carried out during the music playback as the operating state of the service function unit 17.

The dialogue unit 14 selects a dialogue classification according to an operating state of the service function unit 17 and selects a dialogue candidate from the dialogue classification based on the dialogue effect. As a result, since the dialogue of the dialogue classification which differs for the state of the service provided for the driver is carried out, repetition of the same dialogue can be prevented while a more effective dialogue suitable for the state can be carried out.

Further, detailed preferred content of the dialogue classification may be given to each dialogue candidate. The dialogue with the content suitable for the driver's preference (preferred content) is highly effective in improving the degree of concentration of the driver. For example, when the dialogue related to music of a genre preferred by the driver is selected as preferred content, the effect in improving the degree of concentration increases. The dialogue unit 14 may select a dialogue classification and a preference content according to an operating state of the service function unit 17 to carry out the dialogue.

The dialogue unit 14 may select the dialogue candidate by excluding a dialogue candidate used in a predetermined number of latest dialogues. As a result, repetition of the same dialogue can be prevented and the effect in improving the degree of concentration can be prevented from decreasing. The dialogue unit 14 may be adapted to select the dialogue candidate of the dialogue classification different from that used for the previous dialogue. By switching the dialogue to that of different classification, the dialogue effect can be improved.

Further, the dialogue apparatus 11 according to the embodiment has a function of updating not only the dialogue effect of the dialogue candidate in the preference database but also the dialogue candidate itself.

The dialogue candidate addition unit 15 adds the dialogue candidate which is selected based on a use behavior of the driver but is not registered in the preference database to the preference database. A new dialogue suited to the driver's preference can be provided.

The dialogue candidate deletion unit 16 deletes a dialogue candidate from the preference database where the dialogue candidate has the dialogue effect at or below a predetermined value of dialogue effect among the dialogue candidates registered in the preference database. It can be adapted not to use the dialogue content of low dialogue effect and the dialogue content of decreased dialogue effect.

The dialogue unit 14 may control a dialogue for improving the degree of concentration and a dialogue by a service function provided by the service function unit 17, and adjust the dialogues so that they are not provided at the same time.

Next, an example which further embodies the present embodiment will be described.

### [First Example]

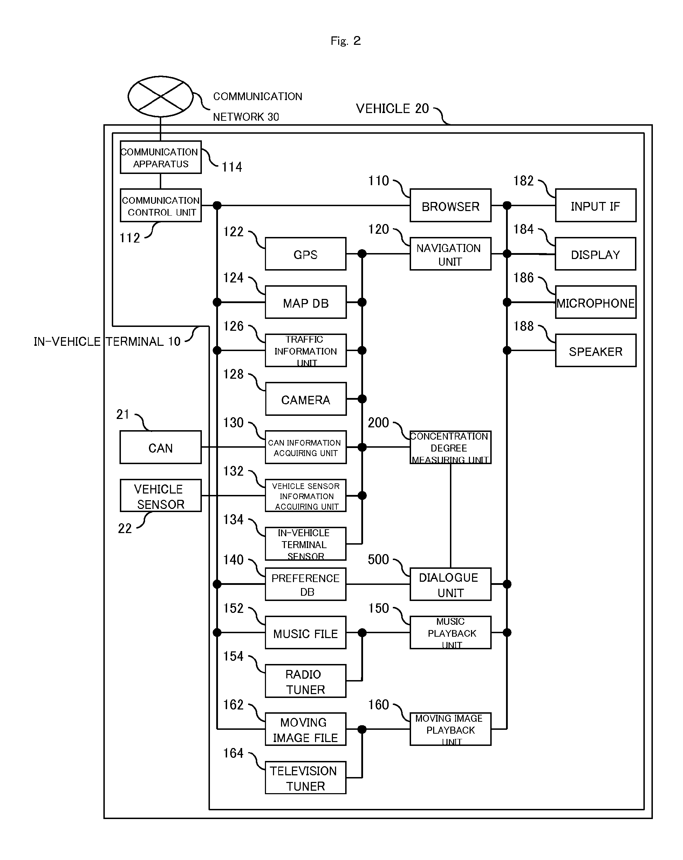

FIG. 2 is a block diagram of an overall system according to the first example.

An in-vehicle terminal 10 is equipped in a vehicle 20 and comprises a browser 110, a communication control unit 112, a communication apparatus 114, a navigation unit 120, a GPS (Global Positioning System) 122, a map database 124, a traffic information unit 126, a camera 128, a CAN (Controller Area Network) information acquiring unit 130, a vehicle sensor information acquiring unit 132, an in-vehicle terminal sensor 134, a preference database 140, a music playback unit 150, a music file 152, a radio tuner 154, a moving image playback unit 160, a moving image file 162, a television tuner 164, an input interface 182, a display 184, a microphone 186, a speaker 188, a concentration degree measuring unit 200, and a dialogue unit 500.

The GPS 122 is a device for positioning itself with indications of the latitude and the route on the earth.

The map database 124 comprises map information including address information, road information, building information such as gas station or school and map related information including information of traffic regulations such as speed limit to be used in route guidance by the navigation unit 120.

The traffic information unit 126 acquires and maintains traffic information which changes at every moment including traffic jam information, traffic accident information, and construction information acquired from a source such as VICS (registered trademark) (Vehicle Information Communication System). Since the traffic information changes at every moment, it cannot be previously accumulated to be continuously used. The traffic information is used for route guidance by the navigation unit 120 and notification of the traffic information to the driver.

The camera 128 takes an image of the driver who is driving the vehicle 20. For example, the face image of the driver is used in measuring the degree of concentration.

The CAN information acquiring unit 130 is connected with the CAN 21 on the vehicle 20 for acquiring operation information of the brake, steering information of steering wheel, speed information, acceleration information, yaw information, fuel consumption and the like as operation information of the vehicle 20.

The vehicle sensor information acquiring unit 132 is connected with the vehicle sensor 22 which measures a distance from obstacles around the vehicle 20 for acquiring information detected by the vehicle sensor 22. For example, information on the distance from the leading vehicle is acquired.

The in-vehicle terminal sensor 134 is a sensor equipped to the in-vehicle terminal 10 and is a gyroscope, for example. The gyroscope is used for positioning of the vehicle 20 and route guidance by the navigation unit 120.

The navigation unit 120 is a kind of service function unit and is responsible for route guidance from the origin to the destination specified by the driver based on the position of the vehicle 20. For example, the navigation unit 120 positions the vehicle 20 by estimating the position of the vehicle 20 from the positioning information which indicates the position of the apparatus itself acquired from the GPS 122 and the in-vehicle terminal sensor 134 and speed information and the like acquired from the CAN information acquiring unit 130 and comparing the estimated position of the vehicle 20 with information in the map database 124 to correct a difference or the like. Then, the navigation unit 120 presents route guidance to the destination to the driver based on the current position of the vehicle 20.

The concentration degree measuring unit 200 measures the driver's degree of concentration on driving. The concentration degree measuring unit 200 calculates the degree of concentration by using the face image of the driver who is driving the vehicle 20 taken by the camera 128 and the operation information of the vehicle 20 acquired from the CAN information acquiring unit 130 and the vehicle sensor information acquiring unit 132.

The dialogue unit 500 carries out a dialogue by using the voice recognition function and the voice synthesis function. When the degree of concentration of the driver decreases to a level which threatens safety of driving from the measured result of the degree of concentration by the concentration degree measuring unit 200, the dialogue unit 500 carries out a dialogue with the driver which is stored in the preference database 140 and has the preference of the high improvement effect on degree of concentration.

The music playback unit 150 is a kind of service function unit and acquires music information from the music file 152 or the radio tuner 154, decodes the music information, and outputs the decoded information via the speaker 188.

The moving image playback unit 160 is also a kind of service function unit and acquires moving image information from the moving image file 162 or the television tuner 164, decodes the moving image information, and outputs the decoded information via the display 184 and the speaker 188.

The communication network 30 is a cellular telephone network or the Internet.

The communication apparatus 114 connects to the communication network 30 of a cellular telephone, a wireless LAN (Local Area Network), or the like and communicates with another terminal or a server.

The communication control unit 112 performs processing of communication protocols such as TCP/IP (Transmission Control Protocol/Internet Protocol) and receives information from another terminal or a server, or acquires information from application software such as the browser 110 with which communication is to be performed, adds information according to the communication protocol specified by another terminal or a server and sends the information.

The browser 110 connects to the communication network 30 via the communication control unit 112 and the communication apparatus 114 and acquires web pages to display the pages on a display monitor or outputs the voice information from the microphone.

Meanwhile, the map database 124, the traffic information 126, the preference database 140, the music file 152, the moving image file 162, and the like which have become obsolete or need replacement can be updated by connecting with the communication network 30 via the communication control unit 112 and the communication apparatus 114 as the browser 110 does and acquiring the information from a server which connects with the communication network 30.

The input interface 182 is an operation unit such as a button, a switch, a keyboard, a touch panel, or the like for the driver to operate the in-vehicle terminal 10 with a finger(s). The display 184 is an apparatus such as a liquid crystal display, an organic EL (ElectroLuminescence) display or the like for displaying image information to the driver, and, for example, is integrally formed with a touch panel for acquiring input information by touch operation. The microphone 186 is an input device for collecting the driver's voice and sending the voice to the dialogue unit 500. The speaker 188 is an output device for providing for the driver with music information from the music playback unit 150 and the moving image playback unit 160, voice guidance and an operation sound for route guidance, music synthesis to be output from the dialogue unit 500 for a dialogue with the driver by audio means.

Next, a calculation method example of the degree of concentration used in the present invention will be described.

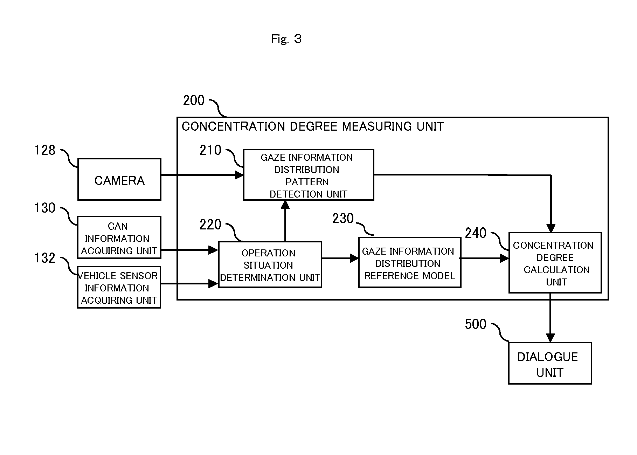

FIG. 3 is a block diagram of the concentration degree measuring unit 200 according to the first example. The concentration degree measuring unit 200 comprises a gaze information distribution pattern detection unit 210, an operation situation determination unit 220, a gaze information distribution reference model 230, and a concentration degree calculation unit 240.

A processing example of the concentration degree measuring unit 200 will be described below.

The gaze information distribution pattern detection unit 210 is connected with the camera 128 and the operation situation determination unit 220, and detects the gaze information distribution pattern for a certain time period in the face image of the driver taken by the camera 128 in response to an instruction of the operation situation determination unit 220, and sends the gaze information distribution pattern to the concentration degree calculation unit 240.

The operation situation determination unit 220 is connected with the CAN information acquiring unit 130 and the vehicle sensor information acquiring unit 132, and determines the operation situation of the vehicle 20 at that moment from the operation information of steering wheel of the vehicle 20, speed information, operation information of brake and the like, and instructs the gaze information distribution pattern detection unit 210 to detect the gaze information distribution pattern of the driver before notifying the operation situation to the gaze information distribution reference model 230. The operation situation here means information indicating the situation of the operation performed by the driver such as running straight on at a certain speed, turning to left, reducing speed by stepping on the brake pedal, accelerating by stepping on the accelerator, and the like.

The gaze information distribution reference model 230 stores gaze information distribution reference models corresponding to the operation situations. The gaze information distribution reference model 230 searches the gaze information distribution reference model corresponding to the operation situation based on the information on the operation situation notified from the operation situation determination unit 220 and sends it to the concentration degree calculation unit 240. The gaze information distribution reference model corresponding to the operation situation here is, for example, patterned movement of gaze information intended to check the left backward direction, left side-view mirror, and a room mirror when the operation situation is turning to left.

The concentration degree calculation unit 240 compares the gaze information distribution pattern of the driver output from the gaze information distribution pattern detection unit 210 with the gaze information distribution reference model corresponding to the operation situation of the gaze information distribution pattern of the driver output from the gaze information distribution reference model 230, and digitizes the result. When the agreement degree of the gaze information distribution pattern of the driver with respect to the gaze information distribution reference model corresponding to the operation situation is big, the concentration degree calculation unit 240 considers that the driver is concentrating on driving and outputs a big value to the dialogue unit 500 as the degree of concentration. On the other hand, when the difference between the gaze information distribution pattern of the driver and the gaze information distribution reference model corresponding to the operation situation is big, the concentration degree calculation unit 240 considers that the driver is not concentrating on driving and outputs a small value to the dialogue unit 500 as the degree of concentration. As such, it is assumed that the degree of concentration is output as a numerical value according to the agreement degree of the gaze information distribution reference model and the gaze information distribution pattern of the driver.

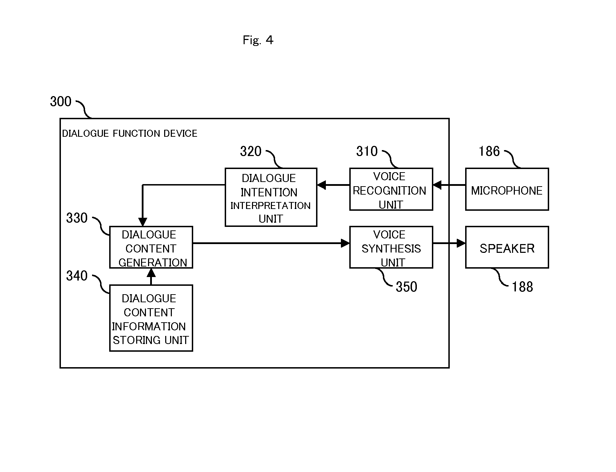

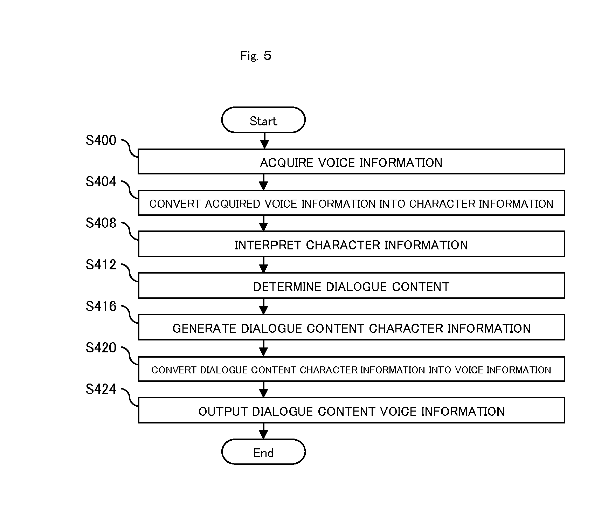

Then, a general dialogue function will be described with reference to FIG. 4 and FIG. 5 before describing the dialogue unit 500.

FIG. 4 is a block diagram of a general dialogue function device. The dialogue function device 300 comprises a voice recognition unit 310 configured to convert a voice of a human dialogue partner acquired from the microphone into character information, a dialogue intention interpretation unit 320 configured to interpret the content spoken by the human dialogue partner from the character information, a dialogue content generation unit 330 configured to generate the dialogue content based on the interpreted content spoken by the human dialogue partner, a dialogue content information storing unit 340 storing the dialogue content according to the dialogue content, and a voice synthesis unit 350 configured to convert the generated character information of the dialogue content into the voice information.

FIG. 5 is a flow chart describing an operation example of the dialogue function device 300. The dialogue function device 300 acquires a voice of a human dialogue partner by using the microphone 186 (step S400). Then, the acquired voice information is converted into the character information by the voice recognition unit 310 (step S404), and the content spoken by the human dialogue partner is interpreted from the character information converted by the dialogue intention interpretation unit 320 (step S408). Next, based on the result of interpreting the content of the human dialogue partner by the dialogue content generation unit 330, the content of dialogue indicating what kind of dialogue is to be carried out in the future (step S412). Subsequently, the dialogue content generation unit 330 generates the character information according to the content of dialogue by using the dialogue content information 340 (step S416). The character information is converted into the voice information by the voice synthesis unit 350 (step S420), and outputs the voice information via the speaker or the like as a response (step S424).

The dialogue unit 500 in the example has a function of carrying out a dialogue for improving the degree of concentration of the driver as well as processing of the general dialogue function device 300 described in FIGS. 4 and 5 incorporated.

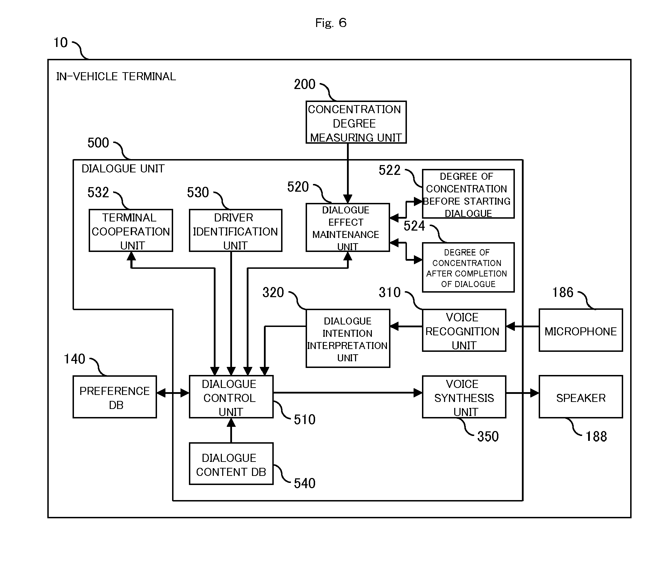

FIG. 6 is a block diagram illustrating a basic configuration example of the dialogue unit 500. The dialogue unit 500 comprises the voice recognition unit 310, the dialogue intention interpretation unit 320, the voice synthesis unit 350, a dialogue control unit 510, a dialogue effect maintenance unit 520, a degree of concentration before starting dialogue 522, a degree of concentration after completion of dialogue 524, a driver identification unit 530, a terminal cooperation unit 532, and a dialogue content database 540.

The dialogue effect maintenance unit 520 is connected to the concentration degree measuring unit 200, the dialogue control unit 510, the degree of concentration before starting dialogue 522, and the degree of concentration after completion of dialogue 524. The dialogue effect maintenance unit 520 monitors the driver's degree of concentration on driving by regularly receiving the degree of concentration from the concentration degree measuring unit 200. When the degree of concentration of the driver decreases to or below a predetermined value and it is detected that the degree of concentration has decreased to a level at which the driver cannot concentrate on driving, the dialogue effect maintenance unit 520 stores the degree of concentration as the degree of concentration before starting dialogue 522 and also notifies the dialogue control unit 510 that the degree of concentration of the driver has decreased to a level at which the driver cannot concentrate on driving. When the dialogue effect maintenance unit 520 receives a notification of completion of dialogue from the dialogue control unit 510, it receives the degree of concentration from the concentration degree measuring unit 200 and stores the degree of concentration as the degree of concentration after completion of dialogue 524. Then, the dialogue effect maintenance unit 520 compares the degree of concentration before starting the dialogue which is stored in the degree of concentration before starting dialogue 522 with the degree of concentration after completion of dialogue which is stored in the degree of concentration after completion of dialogue 524 and sends the improvement effect on concentration by the dialogue to the dialogue control unit 510.

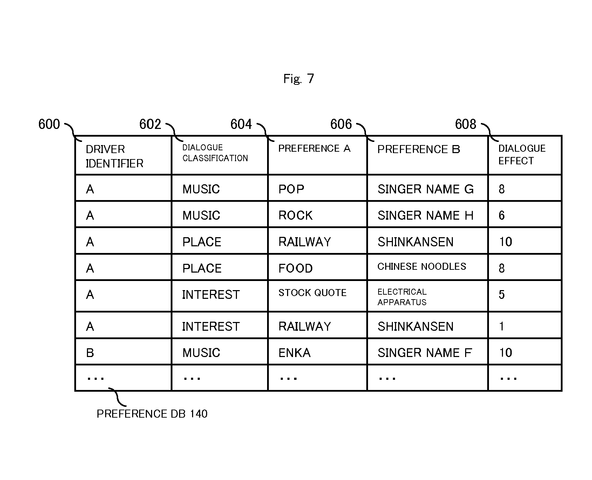

The driver identification unit 530 acquires information identifying the individual driver which indicates who is recognized by the in-vehicle terminal 10 as the driver. The identified individual is sent to the dialogue control unit 510 in the form of driver identifier 600 of FIG. 7 to be described later. The individual driver is identified by such a method of letting the driver to select who the driver is at starting up the in-vehicle terminal 10, or a face recognition function of the face image of the driver taken by the camera 128, or determination using the characteristics of individual voice by the voice recognition function.

The terminal cooperation unit 532 performs the function of cooperating with the service function of the in-vehicle terminal 10. Specifically, whether the route guidance is being performed or not, whether the music is played back or not, or when the music is being played back, the terminal cooperation unit 532 recognizes the operating state of the in-vehicle terminal 10 such as which musical tune is being played back. On the other hand, when the in-vehicle terminal 10 is operated based on the result of interpreting the voice information received from the driver, the terminal cooperation unit 532 outputs an operation request to the in-vehicle terminal 10.

The dialogue control unit 510 is connected with the preference database 140, the dialogue intention interpretation unit 320, the dialogue effect maintenance unit 520, the driver identification unit 530, the terminal cooperation unit 532, and the dialogue content database 540. When the dialogue effect maintenance unit 520 detects that the degree of concentration of the driver decreases to a state at which the driver cannot concentrate on driving, the dialogue control unit 510 receives a request for a dialogue with a purpose of improving the degree of concentration, selects the preference which has a high improvement effect on the degree of concentration of the driver from the preference database 140, generates the dialogue content by using the preference, and carries out the dialogue with the content.

Further, the dialogue control unit 510 determines the improvement effect on the degree of concentration due to the carried out dialogue based on the result of comparing the degree of concentration before starting the dialogue with the degree of concentration after completion of the dialogue in cooperation with the dialogue effect maintenance unit 520, and stores the improvement effect in the preference database 140 as attribute information of preference used in the dialogue. As a result, the preference database 140 is updated every time a dialogue is carried out.

A configuration example of the preference database 140 is illustrated in FIG. 7. The preference database 140 stores the driver identifier 600, a dialogue classification 602, a preference A 604, a preference B 606, and a dialogue effect 608.

The driver identifier 600 is information identifying the individual driver which is identified by the driver identification unit 530. For example, when the individual driver identified by the driver identification unit 530 is a driver with the identifier A, a set with an attribute which is stored as A in the driver identifier 600 is used.

The dialogue classification 602 stores classification of the dialogue contents to which the preference A 604 and the preference B 606 can be applied. When the dialogue control unit 510 decides the dialogue content, the dialogue classification 602 is used in identifying the preference corresponding to the classification. For example, when the dialogue classification 602 is "music", the dialogue classification 602 is used for the dialogue related with music playback, when the dialogue classification 602 is "place", the dialogue classification 602 is used for the dialogue related with position search or guidance, and when the dialogue classification 602 is "interest", the dialogue classification 602 is used for the dialogue related with information provision to the driver.

In the preference A 604 and the preference B 606, keywords related to the preference of the individual driver stored in the driver identifier 600 are stored. The dialogue control unit 510 uses the keywords as the preference keywords of the driver in generating the dialogue content.

The dialogue effect 608 stores the improvement effect of the degree of concentration at the moment when the dialogue indicated by a set of the dialogue classification 602, the preference A 604, and the preference B 606 is used. For example, where the minimum value of the dialogue effect is 1, the maximum value is 10, and the initial value is 5, and when it is determined by the dialogue control unit 510 that the degree of concentration has increased, 1 is added, and when it is determined that the degree of concentration has decreased, 1 is subtracted, and when it is determined that the degree of concentration has not changed, processing without addition and subtraction may be performed.

The dialogue control unit 510 uses the preference A 604 and the preference B 606 which have the maximum values in the dialogue effect 608 from a set of the same dialogue classification 602.

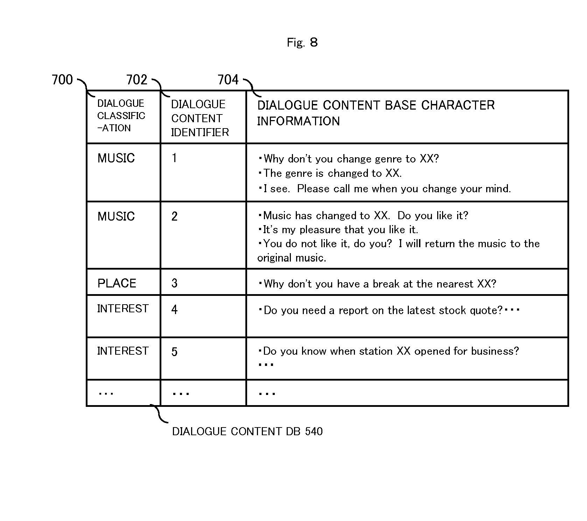

A configuration example of the dialogue content database 540 is illustrated in FIG. 8. The dialogue content database 540 comprises a dialogue classification 700, a dialogue content identifier 702, and dialogue content base character information 704. When the dialogue control unit 510 decides the dialogue content, the dialogue classification 700 is used in identifying the dialogue content corresponding to the classification. For example, when the dialogue classification 700 is "music", the dialogue classification 700 is used for the dialogue related with music playback, when the dialogue classification 700 is "place", the dialogue classification 700 is used for the dialogue related with position search or guidance, and when the dialogue classification 700 is "interest", the dialogue classification 700 is used for the dialogue related with information provision to the driver.

When the dialogue control unit 510 decides the dialogue content, the dialogue content identifier 702 is used to specify the dialogue content base character information 704. Although the dialogue content identifier 702 stores a numerical value as an example in FIG. 8, it may store information in any form as far as the information can identify the dialogue content.

The dialogue content base character information 704 is the character information which the dialogue control unit 510 uses in generating the dialogue content. The word substituted by XX in the dialogue content base character information 704 is substituted by the preference which has a big numerical value in the dialogue effect 608 searched in the preference database 140, i.e., the word indicating a preference which has the high improvement effect of dialogue in degree of concentration.

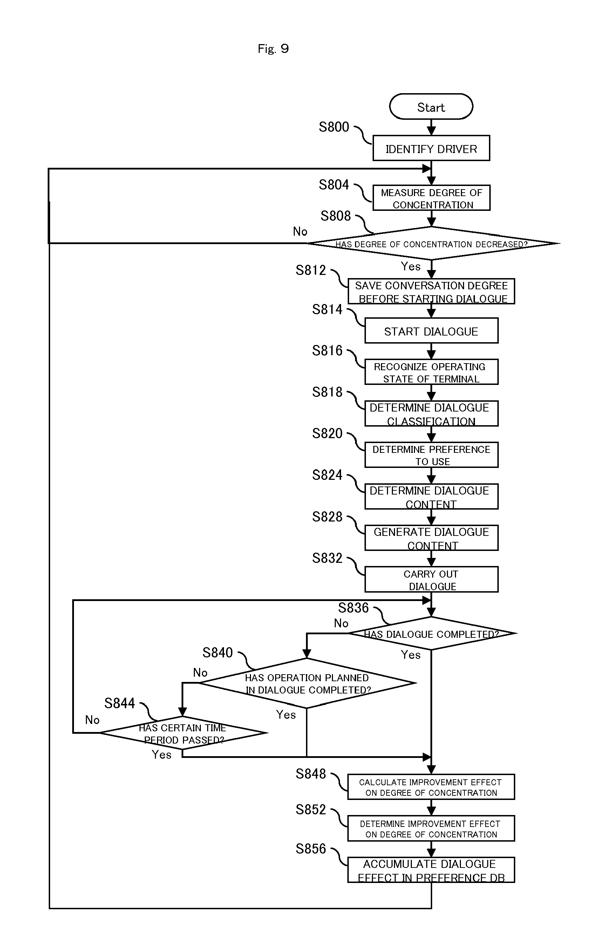

A flow example of the dialogue effect maintenance unit 520 and the dialogue control unit 510 will be described with reference to FIG. 9. The dialogue control unit 510 first acquires the driver identifier 600 from the driver identification unit 530, and identifies the individual driver who is driving the vehicle 20 (step S800). Then, the dialogue effect maintenance unit 520 regularly observes the degree of concentration calculated by the concentration degree measuring unit 200 (step S804), and checks whether the degree of concentration has decreased to a level at which the driver cannot concentrate on driving (step S808).

When the degree of concentration has not decreased to a level at which the driver cannot concentrate on driving, the dialogue effect maintenance unit 520 continues observing the degree of concentration. When the degree of concentration has decreased to a level at which the driver cannot concentrate on driving, the dialogue effect maintenance unit 520 stores the degree of concentration in the degree of concentration before starting dialogue 522 (step S812) and also notifies the dialogue control unit 510 that the degree of concentration has decreased to a level at which the driver cannot concentrate on driving.

When the dialogue control unit 510 receives the notification from the dialogue effect maintenance unit 520 that the degree of concentration has decreased to a level at which the driver cannot concentrate on driving, it starts dialogue processing for the purpose of improving the degree of concentration (step S814).

First, in order to decide the dialogue content, the dialogue control unit 510 checks the terminal cooperation unit 532 for recognizing the operating state of the in-vehicle terminal 10 such as whether it is in the midst of route guidance, whether it is playing back music, or the like (step S816), and decides the dialogue classification which fits the operating state (step S818).

Then, the dialogue control unit 510 checks the preference database 140, and decides the preference keyword to be used in the dialogue by reading out the recorded content from the preference A 604 and the preference B 606 which have the sets of the maximum numerical values in the dialogue effect 608 among the dialogue classification decided in step S818 (step S820).

Subsequently, the dialogue control unit 510 searches for the dialogue classification 700 of the dialogue content database 540 which is a set of the dialogue classification decided in step S818 and selects the dialogue content base character information 704 which fits the operating state of the in-vehicle terminal 10 from the set (step S824). The dialogue control unit 510 generates the dialogue content character information by inserting the preference keyword into the selected dialogue content base character information (step S828), and starts the dialogue by sending the information to the voice synthesis unit 350 (step S832).

In order to check whether the object of the dialogue content is achieved by information exchange with the driver or not, the dialogue control unit 510, first, checks whether the scheduled voice dialogue with the dialogue content character information generated in step S828 has completed or not (step S836). When the voice dialogue has not completed, the driver might be performing an operation which has been scheduled in the dialogue by operating on the input interface 182 instead of making a voice response, therefore, the dialogue control unit 510 checks whether the scheduled operation with the dialogue content character information generated in step S828 has completed or not by checking the terminal cooperation unit 532 (step S840). When it is not confirmed that the operation has completed in step S840, the dialogue control unit 510 continues the processing in steps S836 and S840 until a certain time period passes (step S844).

When it is confirmed that the dialogue or a scheduled operation has completed, or when it is not confirmed that the dialogue or a scheduled operation has completed after the certain time period, the dialogue control unit 510 requests from the dialogue effect maintenance unit 520 to measure the improvement effect on degree of concentration. Then, the dialogue effect maintenance unit 520 receives the request from the dialogue control unit 510, acquires the degree of concentration from the concentration degree measuring unit 200 and stores the degree of concentration in the degree of concentration after completion of dialogue 524, subtracts the degree of concentration stored in the degree of concentration before starting dialogue 522 from the degree of concentration after completion of the dialogue, and sends the obtained difference of the degree of concentration to the dialogue control unit 510 (step S848).

The dialogue control unit 510 determines the improvement effect of the degree of concentration due to the dialogue from the result of subtracting the degree of concentration before starting the dialogue from the degree of concentration after the completion of dialogue received from the dialogue effect maintenance unit 520 (step S852). Specifically, when the result of subtracting the degree of concentration before starting the dialogue from the degree of concentration after completion of the dialogue is a plus figure, it is determined that the dialogue has the improvement effect, and when the degrees of concentration are equal or the difference is slight, it is determined that the dialogue has no effect, and when the result is a minus figure, it is determined that the dialogue changes the degree of concentration for the worse. Finally, the dialogue control unit 510 accumulates the improvement effect of the degree of concentration by the dialogue determined in step S852 in the preference database 140 (step S856). Specifically, the preference and the effect of the dialogue of the preference are accumulated in a manner of: when the degree of concentration has increased in the dialogue control unit 510, 1 is added since the improvement effect has been confirmed, and when the degree of concentration has decreased, 1 is subtracted since the dialogue changes the degree of concentration for the worse, and when the degree of concentration has not changed or the changed value is slight, it is determined that the dialogue is not effective on the improvement effect and both addition and subtraction are not performed. When the processing in S856 has completed, the dialogue control unit 510 and the dialogue effect maintenance unit 520 return to the processing of observing the degree of concentration in step S804 and continues monitoring the degree of concentration.

The processing flow described in FIG. 9 can be exemplified by using FIG. 7 and FIG. 8 as the dialogue control unit 510 acquiring that the driver identifier is A from the driver identification unit 530 in step S800. When it is confirmed that the degree of concentration has decreased to a level at which the driver cannot concentrate on driving in step S808, the dialogue control unit 510 performs the processing in step S816 for confirming the operation state of the in-vehicle terminal 10. When it is confirmed that classical music is being played back by the dialogue control unit 510, the dialogue control unit 510 decides that the dialogue classification is music in step S818.

Then, the dialogue control unit 510 checks the preference database 140, and decides the preference A = pop, the preference B = singer name G which have 8 the biggest numerical value of the dialogue effect 608 as the preference keyword to be inserted in the dialogue content from the set of preferences which have A stored in the driver identifier 600 and which also have music as the dialogue classification 602 (step S820). Then, the dialogue control unit 510 acquires the dialogue content base character information, to which pop can be inserted as the preference A and which has 1 as the dialogue content identifier 702, from the set of preferences which have music stored in the dialogue classification 700 of the dialogue content database 540 (step S824), and generates a series of character information such as "Why don't you change genre to pop?" as a question to the driver, and "The genre is changed to pop." to be used in the case where an agreement response is returned from the driver, "I see. Please call me when you change your mind." to be used in the case where an disagreement response is returned from the driver (step S828). Subsequently, the dialogue control unit 510 carries out the dialogue by sending the character information "Why don't you change genre to pop?" to the voice synthesis unit 350 and waits for an agreement response or a disagreement response from the driver (step S832).

When a response "Yes, please change genre." is returned from the driver, the dialogue intention interpretation unit 320 determines that an agreement is obtained from the driver, and a message to that effect is sent to the dialogue control unit 510. Since an agreement is obtained from the driver, the dialogue control unit 510 changes genre of music which is being played back in the in-vehicle terminal 10 from the classical music to the pop by using the terminal cooperation unit 532, while sending the character information "The genre is changed to pop." to be used in the case where an agreement response is returned from the driver to the voice synthesis unit 350, and finishes the dialogue.

Since the dialogue has completed, the dialogue control unit 510 requests the dialogue effect maintenance unit 520 to calculate the improvement effect on the degree of concentration (step S848), receives the result and determines the improvement effect on degree of concentration. Since the result received from the dialogue effect maintenance unit 520 is a positive numerical value, the dialogue control unit 510 determines that the dialogue has the improvement effect on the degree of concentration (step S852), adds 1 to the numerical value 8 of the dialogue effect 608 of the set which has A as the driver identifier 600, music as the dialogue classification 602, pop as the preference A 604, and singer name G as the preference B in the preference database 140, and rewrites 8 with 9.

When it is determined that the dialogue changes the degree of concentration for the worse in the determination on the improvement effect on the degree of concentration due to the dialogue in step S 852, 1 is subtracted from the numerical value of the dialogue effect 608 of the set which is used for the dialogue in the preference database 140. In the example of FIG. 7, the numerical value of the dialogue effect 608 of the set, in which the driver identifier 600 is A, the dialogue classification 602 is music, the preference A 604 is pop, and the preference B is singer name G, is rewritten from 8 to 7. When the effect of changing the degree of concentration for the worse is repeated for two more times by the dialogue using the set in which the driver identifier 600 is A, the dialogue classification 602 is music, the preference A 604 is pop, and the preference B is singer name G, the numerical value of the dialogue effect 608 of the dialogue in which the driver identifier 600 is A, the dialogue classification 602 is music, the preference A 604 is pop, and the preference B is singer name G becomes 5.

In that case, in the next decision of the preference for the driver identifier A in step S820 in FIG. 9, since the improvement effect on the degree of concentration due to the dialogue further increases with the dialogue effect 6, the set in which the driver identifier 600 is A, the dialogue classification 602 is music, the preference A 604 is rock, and the preference B is singer name H is to be selected.

Meanwhile, the preference set which changes the degree of concentration for the worse in many cases and has a low numerical value of the dialogue effect 608 may be changed from outside to another preference set via the communication network 30 or the like.

For example, information on the driver's preference may be accumulated from the use history of a computer, a cellular telephone, or a smartphone which the driver uses outside of the vehicle such as at home and a new piece of preference information may be registered to the preference database 140 from the computer regularly or when a predetermined operation is performed. For example, the preference on music may be acquired from the playback number or the playback frequency of music files stored in a personal computer which the driver uses at home. Further, various kinds of driver's preferences may be acquired from the items of many number of searches or many number of views in the search history or the view history of Web pages in the computer. Further, for example, changes in the dialogue effect may be maintained as a history for each set of preferences registered in the preference database, and based on the history, the set of preferences which continuously indicates low values of dialogue effect may be periodically deleted from the preference database. Alternatively, the set of preferences which has the dialogue effect at or lower than a certain value continued for more than a certain time period may be deleted.

By updating the content of the preference database as required in the above described manners, continuous further improvement of the driver's degree of concentration on driving can be enabled.

As described above, when the driver's degree of concentration on driving is lowering to a state in which the driver cannot concentrate on driving in the in-vehicle terminal and dialogue system such as car navigation system which carries out a dialogue with the driver by the voice recognition function and the voice synthesis function, the dialogue content is generated by using the preference of high improvement effect on the driver's degree of concentration on driving and the dialogue is carried out to conduct the effective improvement on the driver's degree of concentration on driving.

Further, the driver's degree of concentration on driving before starting the dialogue is compared with the driver's degree of concentration on driving after completion of the dialogue to determine the improvement effect on the dialogue content, and the result is stored as the improvement effect with the preference. As a result, when the improvement effect on the driver's degree of concentration on driving is lowering from familiarity or the like, the improvement effect of the preference lowers relative to that of other preferences, therefore, the preference is not used and the preference with the higher improvement effect is used. Therefore, continuous improvement on the driver's degree of concentration on driving is realized.

### [Second Example]

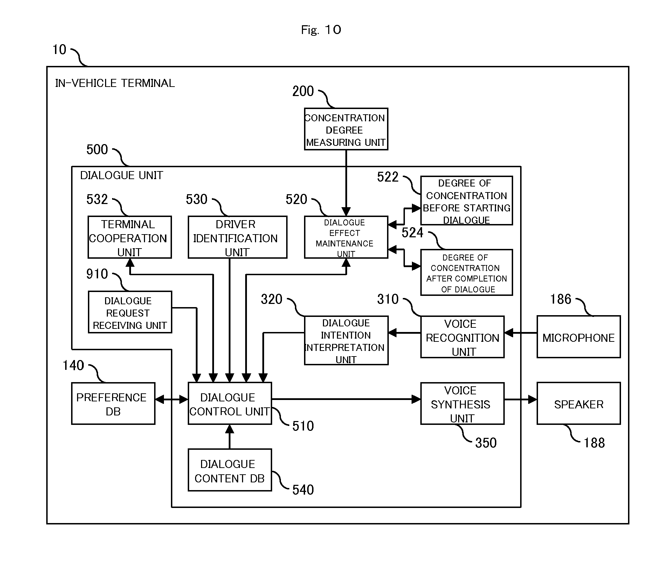

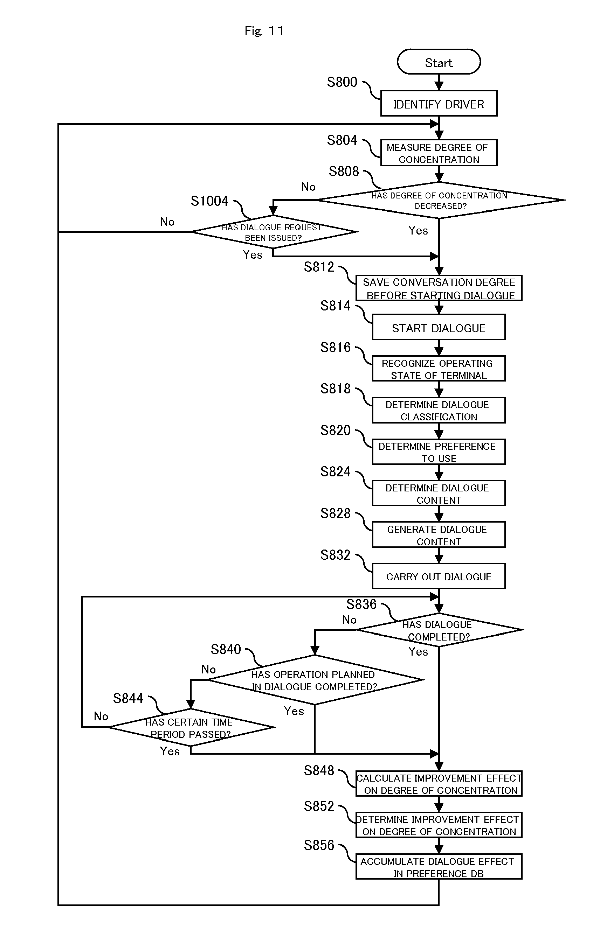

The second example will be described with reference to FIGS. 10, 11. FIG. 10 is a block diagram of an in-vehicle terminal according to the second example. The in-vehicle terminal of the second example has a dialogue request receiving unit 910 added to the configuration example of the first example illustrated in FIG. 6. As a result, the in-vehicle terminal 10 not only carries out the dialogue by detecting decrease of the degree of concentration as in the first example but also realizes implementation of the dialogue according to a request by the service function of the in-vehicle terminal 10. For example, the dialogue is the dialogue for notifying the driver of traffic jam information requested by the navigation unit 120, the dialogue for prompting the driver to take a rest in a long time driving, and the dialogue for notifying the driver that the vehicle has arrived at the destination.

FIG. 11 is a flow chart describing an operation of the in-vehicle terminal which enables a dialogue request reception by a service function of the in-vehicle terminal. Step S1004 for confirmation processing of the dialogue request receiving unit 910 is added to the processing flow example of FIG. 9 in the first example. When decrease to a state in which the driver cannot concentrate on driving is not detected in step S808, the dialogue control unit 510 checks the dialogue request receiving unit 910 to check whether a request for carrying out the dialogue is issued from the in-vehicle terminal 10 or not in step S1004. When a request for the dialogue is not issued from the in-vehicle terminal 10, the operation returns to step S804 to continue monitoring the degree of concentration. When a request for the dialogue is issued from the in-vehicle terminal 10, the dialogue is carried out by the processing of step S812 and after, while the improvement effect of the degree of concentration after the dialogue is determined and the improvement effect is accumulated in the dialogue effect of the preference used in the dialogue of the preference database 140.

Specification of the dialogue content in the dialogue request from the in-vehicle terminal 10 received by the dialogue request receiving unit 910 may be a case where only the dialogue classification corresponding to the operating state of the in-vehicle terminal 10 (content stored in the dialogue classification 602 of FIG. 7 and dialogue classification 700 of FIG. 7) is specified and a case where the dialogue content is concretely specified with the numerical value of the dialogue content identifier 702 in addition to the dialogue classification.

In the case where only the dialogue classification is specified to the dialogue request received by the dialogue request receiving unit 910, the dialogue control unit 510 decides the preference keywords to be used in the dialogue by checking the preference database 140 by using the specified dialogue classification and reading out the recorded content of the preference A 604 and the preference B 606 in the set in which the dialogue effect 608 is the biggest numerical value from the set in which the dialogue classification is stored in step S820. Subsequently, the dialogue control unit 510 searches the dialogue content database 540 with the dialogue classification specified in step S824 and selects the dialogue content base character information 704 which fits the operating state of the in-vehicle terminal 10 from the searched out set.

In the case where the dialogue classification and the dialogue content identifier 702 are specified to the dialogue request received by the dialogue request receiving unit 910, the dialogue control unit 510 decides the preference keywords to be used in the dialogue by checking the preference database 140 by using the specified dialogue classification and reading out the recorded content of the preference A 604 and the preference B 606 in the set in which the dialogue effect 608 is the biggest numerical value from the set in which the dialogue classification is stored in step S820. Subsequently, the dialogue control unit 510 selects the dialogue content base character information 704 of the set which agrees with the numerical value of the dialogue content identifier 702 specified by the in-vehicle terminal 10 by using the dialogue content identifier 702 in searching the dialogue content database 540 in step S824.

### [Third Example]

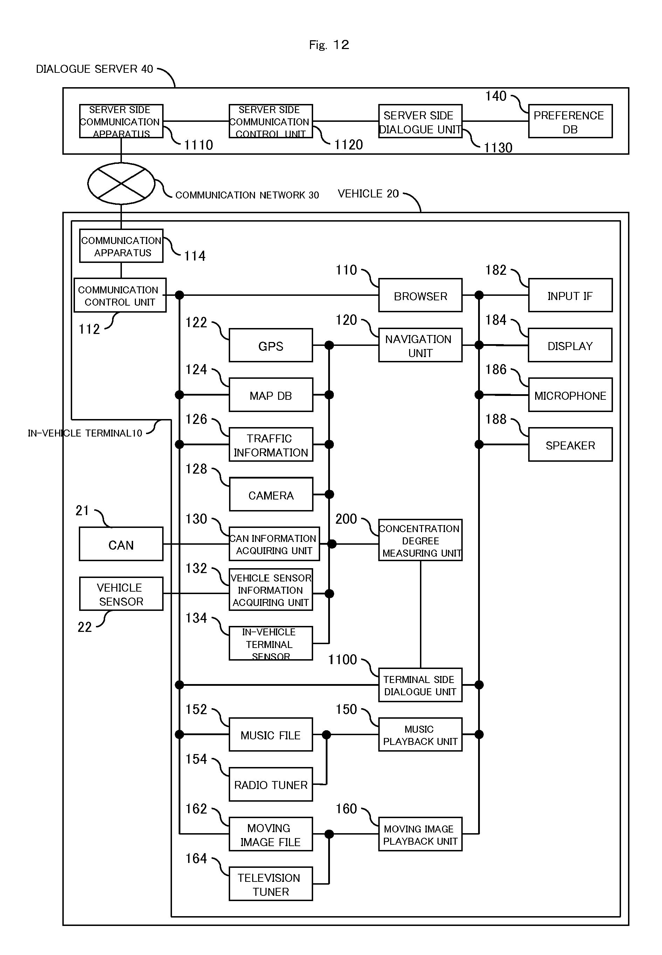

The third example will be described with reference to FIGS. 12 to 17. The third example has the function of the dialogue unit 500 which is equipped to the in-vehicle terminal 10 in the first example divided into the in-vehicle terminal 10 and a server connected via the communication network 30.

FIG. 12 is a block diagram of an overall system according to the third example. The dialogue unit 500 of FIG. 2 is divided into the terminal side dialogue unit 1100 in the in-vehicle terminal 10 and the server side dialogue unit 1130 in the dialogue server 40 in FIG. 12. Further, the preference database 140 is equipped in the dialogue server 40.

The terminal side dialogue unit 1100 connects to the communication network 30 via the communication control unit 112 and the communication apparatus 114, and communicates with the dialogue server 40. The server side dialogue unit 1130 connects to the communication network 30 via a server side communication control unit 1120 and the server side communication apparatus 1100, and communicates with the in-vehicle terminal 10.

The terminal side dialogue unit 1100 performs information collection for the in-vehicle terminal 10 used in dialogue, input of the voice information from the driver, and output of the dialogue content to the driver. The server side dialogue unit 1130 performs the voice recognition, decision of the dialogue content, synthesis of the dialogue content, and voice synthesis based on the information from the in-vehicle terminal 10. Further, the preference database 140 is equipped in the dialogue server 40.

The server side communication apparatus 1100 is an apparatus for establishing communication with another server or terminal by connecting to the communication network 30. The server side communication control unit 1120 has functions of performing processing of communication protocols such as TCP/IP and receiving information from another server or terminal, or acquiring information from application software which operates on the server, processing information according to the communication protocol specified by another server or terminal and sending the information.

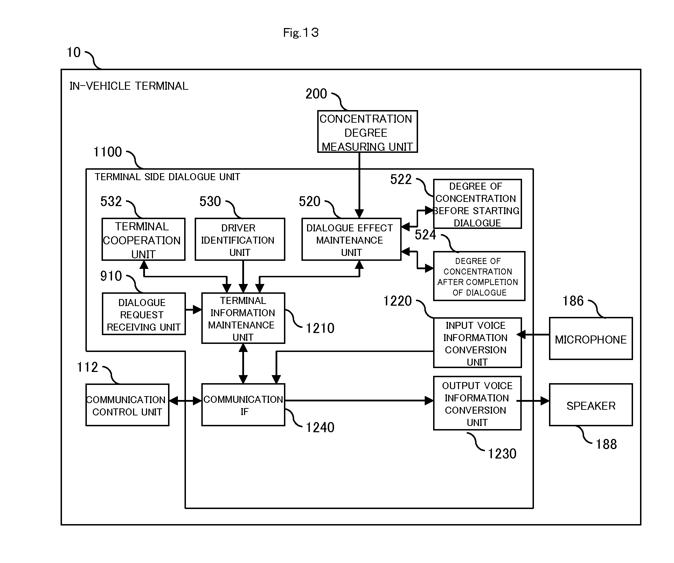

FIG. 13 is a block diagram of the terminal side dialogue unit 1100. The terminal side dialogue unit 1100 comprises the dialogue effect maintenance unit 520, the degree of concentration before starting dialogue 522, the degree of concentration after completion of dialogue 524, the driver identification unit 530, the terminal cooperation unit 532, the dialogue request receiving unit 910, a terminal information maintenance unit 1210, an input voice information conversion unit 1220, an output voice information conversion unit 1230, and a communication interface 1240.

The dialogue effect maintenance unit 520, the degree of concentration before starting dialogue 522, the degree of concentration after completion of dialogue 524, the driver identification unit 530, the terminal cooperation unit 532, and the dialogue request receiving unit 910 have the same functions as those described by using FIG. 6 and FIG. 10.

The terminal information maintenance unit 1210 connects to the dialogue effect maintenance unit 520, the driver identification unit 530, the terminal cooperation unit 532, the dialogue request receiving unit 910, and the communication interface 1240 to acquire information on the in-vehicle terminal 10 to use in the dialogue from the dialogue effect maintenance unit 520, the driver identification unit 530, the terminal cooperation unit 532, and the dialogue request receiving unit 910, and sends the information to the dialogue server 40 via the communication interface 1240.

The input voice information conversion unit 1220 converts the voice input from the microphone 186 into the voice information and sends the voice information to the dialogue server 40 via the communication interface 1240. Since raw voice information acquired from the microphone 186 generally has a large amount of information extending the communication time and pressing the communication band when the raw voice information is sent via the communication network 30, the conversion of the input voice here includes deletion of the amount of information by applying a voice compression technique.

The output voice information conversion unit 1230 receives the voice synthesis result of the dialogue content output from the dialogue server 40 and outputs the voice synthesis result to the speaker 188. As described above, since uncompressed voice information has a large amount of information when it is sent via the communication network 30, the voice synthesis result of the dialogue content output from the dialogue server 40 is also sent with the amount of information reduced by applying a voice compression technique. The output voice information conversion unit 1230 extends the compressed voice synthesis result and converts it into a form which can be output to the speaker 188.

The communication interface 1240 is an input-output interface for the terminal information maintenance unit 1210, the input voice information conversion unit 1220, and the output voice information conversion unit 1230 to communicate with the dialogue server 40 via the communication control unit 112.

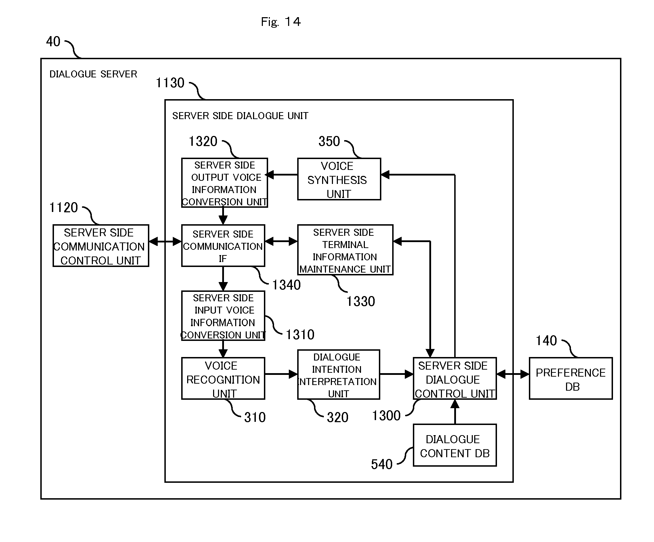

FIG. 14 is a block diagram of the server side dialogue unit 1130. The server side dialogue unit 1130 comprises the voice recognition unit 310, the dialogue intention interpretation unit 320, the voice synthesis unit 350, the dialogue content database 540, a server side dialogue control unit 1300, a server side input voice information conversion unit 1310, a server side output voice information conversion unit 1320, a server side terminal information maintenance unit 1330, and a server side communication interface 1340 and connects with the preference database 140 and the server side communication control unit 1120. The preference database 140 has the same function as that described by using FIG. 7. The voice recognition unit 310, the dialogue intention interpretation unit 320, and the voice synthesis unit 350 have the same functions as those described by using FIG. 4. The dialogue content database has the same function as that described by using FIG. 6.

The server side input voice information conversion unit 1310 acquires the driver's voice information which is compressed by the voice compressing technique output from the input voice information conversion unit 1220 of the terminal side dialogue unit 1100 via the server side communication interface 1340, extends the compressed voice information and sends the information to the voice recognition unit 310.

The server side output voice information conversion unit 1320 compresses the dialogue content voice information generated by the voice synthesis unit 350 by the voice compressing technique and sends the information to the output voice information conversion unit 1230 of the terminal side dialogue unit 1100 via the server side communication interface 1340.

The server side terminal information maintenance unit 1330 has functions of communicating with the terminal information maintenance unit 1210 of the terminal side dialogue unit 1100 via the server side communication interface 1340 to acquire information on the dialogue of the in-vehicle terminal 10, request the dialogue effect maintenance unit 520 to acquire the degree of concentration, and operate the in-vehicle terminal 10 by using the terminal cooperation unit 532.

The server side dialogue control unit 1300 is connected with the preference database 140, the dialogue intention interpretation unit 320, the voice synthesis unit 350, the dialogue content database 540, and the server side terminal information maintenance unit 1330. When the server side terminal information maintenance unit 1330 detects that the driver's degree of concentration decreases to a state at which the driver cannot concentrate on driving, the server side dialogue control unit 1300 selects the preference which has a high improvement effect on the degree of concentration of the driver from the preference database 140, generates the dialogue content, and carries out the dialogue with the dialogue content.

Further, the server side dialogue control unit 1300 determines the improvement effect on the degree of concentration due to the dialogue by the server side terminal information maintenance unit 1330 comparing the degree of concentration before starting the dialogue with the degree of concentration after completion of the dialogue, and stores the improvement effect in the preference database 140 as attribute information of preference used in the dialogue.

The server side communication interface 1340 is an input-output interface for the server side input voice information conversion unit 1310, the server side output voice information conversion unit 1320, and the server side terminal information maintenance unit 1330 to communicate with the in-vehicle terminal 10 via the server side communication control unit 1120.

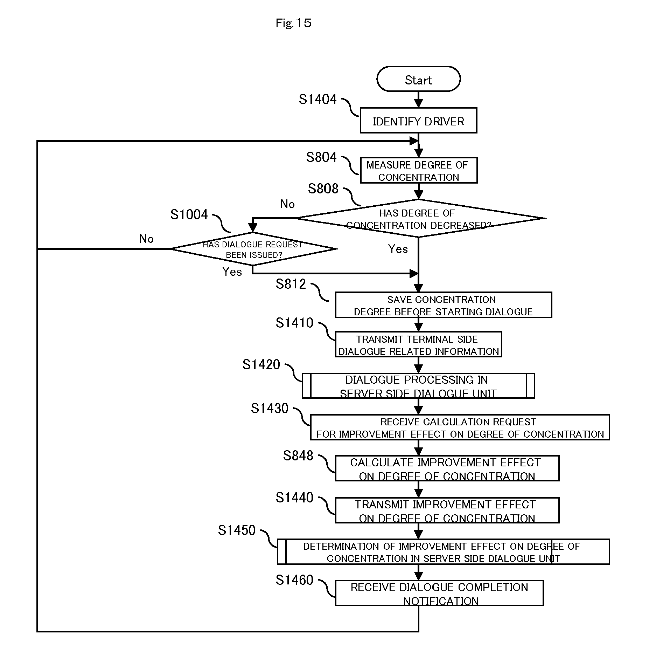

FIG. 15 is a flow chart describing an operation of the terminal side dialogue unit 1100. The terminal side dialogue unit 1100 first acquires the driver identifier from the driver identification unit 530, identifies the individual driver who is driving the vehicle 20, and stores the driver identifier in the terminal information maintenance unit 1210 (step S1404).

Then, the dialogue effect maintenance unit 520 regularly observes the degree of concentration calculated by the concentration degree measuring unit 200 (step S804), and checks whether the degree of concentration has decreased to a level at which the driver cannot concentrate on driving (step S808). When the degree of concentration has decreased to a level at which the driver cannot concentrate on driving, the dialogue effect maintenance unit 520 stores the degree of concentration in the degree of concentration before starting dialogue 522 (step S812).

When the degree of concentration has not decreased to a level at which the driver cannot concentrate on driving, the dialogue effect maintenance unit 520 checks the dialogue request receiving unit 910. When the dialogue request is issued from the in-vehicle terminal 10, the dialogue effect maintenance unit 520 acquires the degree of concentration from the degree of concentration degree measuring unit 200 and stores the degree of concentration in the degree of concentration before starting dialogue 522 (step S812). When the dialogue request is not issued from the in-vehicle terminal 10, the operation returns to step S804 to continue monitoring the degree of concentration.

When step S812 has completed, the dialogue effect maintenance unit 520 sends the terminal side dialogue related information stored in the terminal information maintenance unit 1210 to the server side dialogue unit 1130 to request the server side dialogue unit 1130 to start the dialogue (step S1410). At this moment, when decrease of the degree of concentration is detected in step S808, the terminal side dialogue related information saved in the terminal information maintenance unit 1210 is the operating state of the in-vehicle terminal 10 acquired from the driver identifier and the terminal cooperation unit 532, and when the dialogue request is issued from the in-vehicle terminal 10 in step S1004, the terminal side dialogue related information is the driver identifier, the dialogue classification and the dialogue content identifier added to the dialogue request from the in-vehicle terminal 10, and the operating state of the in-vehicle terminal 10 acquired from the terminal cooperation unit 532.

Hereinafter, the completion of the dialogue processing by the server side dialogue unit 1130 is waited for (step S1420).

When the dialogue processing by the server side dialogue unit 1130 has completed and a request for calculating the improvement effect on the degree of concentration is received from the server side dialogue unit 1130 (step S1430), the dialogue effect maintenance unit 520 acquires the degree of concentration from the concentration degree measuring unit 200 and stores it in the degree of concentration after completion of dialogue 524, subtracts the degree of concentration stored in the degree of concentration before starting dialogue 522 from the degree of concentration after completion of dialogue (step S848), and sends the calculated difference of the degree of concentration to the server side dialogue unit 1130 (step S1440). Then, the completion of the improvement effect determination on the degree of concentration in the server side dialogue unit 1130 is waited for (step S1450). When the improvement effect determination on the degree of concentration in the server side dialogue unit 1130 has completed and the terminal side dialogue unit receives the dialogue completion notification, the operation returns to monitoring the degree of concentration (step S1460).

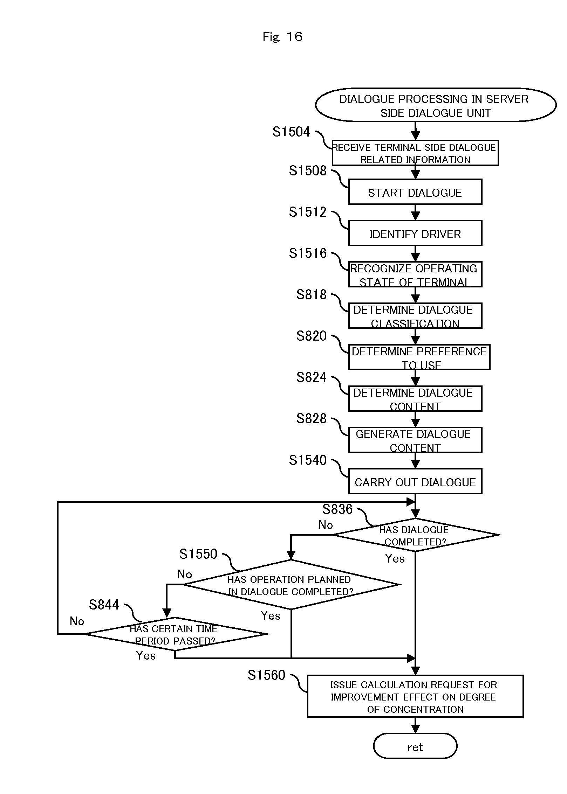

FIG. 16 is a flow chart describing a dialogue processing example in the server side dialogue unit 1130 described in step S1420 of FIG. 15. When the server side terminal information maintenance unit 1330 receives the terminal side dialogue related information from the terminal side dialogue unit 1100, it notifies the server side dialogue control unit 1300 that it has received the terminal side dialogue related information (step S1504).

In response to the notification of reception of the terminal side dialogue related information, the server side dialogue control unit 1300 starts the dialogue (step S1508). The server side dialogue control unit 1300 analyzes the terminal side dialogue related information and identifies the driver by the driver identifier (step S1512), recognizes the operating state of the in-vehicle terminal 10 (step S1516), and decides the dialogue classification which fits the operating state (step S818).

Subsequently, the server side dialogue control unit 1300 checks the preference database 140, and decides the preference keyword to be used in the dialogue by reading out the recorded content from the preference A 604 and the preference B 606 which have the sets of the maximum numerical values in the dialogue effect 608 among the dialogue classification decided in step S818 (step S820).

Subsequently, the server side dialogue control unit 1300 searches for the set in which the dialogue classification 700 of the dialogue content database 540 is the dialogue classification decided in step S818 and selects the dialogue content base character information 704 which fits the operating state of the in-vehicle terminal 10 from the set (step S824). By inserting the preference keyword into the selected dialogue content base character information, dialogue content character information is generated (step S828).

Then, the server side dialogue control unit 1300 sends the dialogue content character information to the voice synthesis unit 350. The voice synthesis unit 350 compresses the voice synthesis result by the server side output voice information conversion unit and sends it to the terminal side dialogue unit 1100 via the server side communication interface 1340 to start the dialogue (step S1540).

When the dialogue classification to be added to the dialogue request from the in-vehicle terminal 10 is added to the terminal side dialogue related information received in step S1504, the dialogue classification specified by the in-vehicle terminal 10 is used in step S818. Further, when the dialogue content identifier to be added to the dialogue request from the in-vehicle terminal 10 is added to the terminal side dialogue related information received in step S1504, the dialogue content base character information which is the set of the numerical values of the dialogue content identifiers which are specified by the in-vehicle terminal 10 is used in decision of the dialogue content in step S824.

In order to check whether the object of the dialogue content is achieved by information exchange with the driver or not, the server side dialogue control unit 1300 checks whether the scheduled voice dialogue with the dialogue content character information generated in step S828 has completed or not (step S836). When the voice dialogue has not completed, the driver might be performing an operation which has been scheduled in the dialogue by operating on the input interface 182 with a finger instead of making a voice response, the server side dialogue control unit 1300 checks whether the scheduled operation with the dialogue content character information generated in step S828 has completed or not by checking the terminal cooperation unit 532 via the server side terminal information maintenance unit 1330 (step S1550). When the completion of the operation cannot be checked in step S1550, the checking processing in step S836 and S1550 is continued until a certain time period passes (step S844).

When it is confirmed that the dialogue or a scheduled operation has completed, or when it is not confirmed that the dialogue or a scheduled operation has completed after the certain time period, the server side dialogue control unit 1300 requests from the terminal side dialogue unit 1100 to measure the improvement effect on degree of concentration.

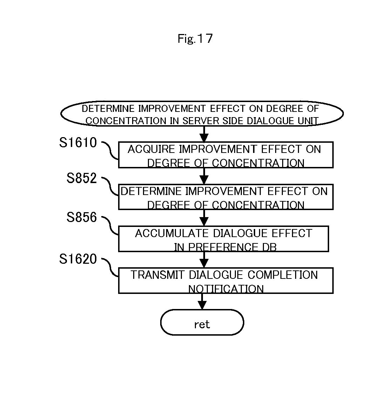

FIG. 17 is a flow chart describing a determination processing example of the improvement effect on the degree of concentration in the server side dialogue unit 1130 described in step S1450 of FIG. 15. When the server side dialogue control unit 1300 of the server side dialogue unit 1130 acquires the improvement effect on the degree of concentration by the terminal side dialogue unit 1100 (step S1610), it determines on the improvement effect on the degree of concentration due to the dialogue (step S852).

Subsequently, the server side dialogue control unit 1300 accumulates the improvement effect of the degree of concentration due to the dialogue determined in step S852 in the preference database 140 (step S856). When the server side dialogue control unit 1300 has completed the processing in step S856, it finishes the improvement effect on the degree of concentration determination processing by sending the dialogue completion notification to the terminal side dialogue unit 1100 (step S1620).

As described above, when the driver's degree of concentration on driving is lowering to a state in which the driver cannot concentrate on driving in the in-vehicle terminal and dialogue system such as car navigation system which carries out information collection of the in-vehicle terminal to be used in the dialogue, input of the voice information from the driver, and output of the dialogue content to the driver at the terminal side, and the voice recognition, decision of the dialogue content, synthesis of the dialogue content, and voice synthesis based on the information from the in-vehicle terminal at the server side, the dialogue content is generated by using the preference of high improvement effect on the driver's degree of concentration on driving and the dialogue is carried out to conduct the effective improvement on the driver's degree of concentration on driving.

Further, the driver's degree of concentration on driving before starting the dialogue is compared with the driver's degree of concentration on driving after completion of the dialogue to determine the improvement effect on the dialogue content, and the result is stored as the improvement effect with the preference. As a result, when the improvement effect on the driver's degree of concentration on driving is lowering from familiarity or the like, the improvement effect of the preference lowers relative to that of other preferences, therefore, the preference is not used and the preference with the higher improvement effect is used. Therefore, continuous improvement on the driver's degree of concentration on driving is realized.

The above described embodiments and examples of the present invention are examples for describing the present invention and are not intended to limit the scope of the present invention to the embodiments or examples. Those skilled in the art can implement the present invention in other various aspects without departing from the spirit of the present invention.

## Claims

1. A dialogue apparatus configured to carry out a dialogue with a driver who is driving a vehicle, comprising:
a storage unit configured to maintain a preference database in which a dialogue candidate to be a candidate of content for a dialogue with the driver and a dialogue effect indicating a degree of improving the driver's degree of concentration on driving due to a dialogue by the dialogue candidate are associated with each other;
a concentration degree measuring unit configured to measure the driver's degree of concentration on driving; and
a dialogue unit configured to select a dialogue candidate based on the dialogue effect in the preference database when the degree of concentration measured by the concentration degree measuring unit falls below a predetermined threshold, and then, carry out a dialogue by the selected dialogue candidate, and based on the degree of concentration before carrying out the dialogue and after carrying out the dialogue, calculate the dialogue effect of the dialogue, and update the dialogue effect of the preference database.

2. A dialogue apparatus according to claim 1, further comprising a service function unit configured to provide various service functions to the driver, wherein
the preference database records dialogue classifications and dialogue effects with respect to a plurality of dialogue candidates, and
the dialogue unit selects a dialogue classification according to an operating state of the service function unit, and selects a dialogue candidate from the dialogue classification based on the dialogue effect.

3. A dialogue apparatus according to claim 1 or 2, wherein the dialogue unit selects the dialogue candidate by excluding a dialogue candidate used in a predetermined number of latest dialogues.

4. A dialogue apparatus according to any one of claims 1 to 3, further comprising a dialogue candidate addition unit configured to add a dialogue candidate to the preference database wherein the dialogue candidate is selected based on a use behavior of the driver but is not registered in the preference database.

5. A dialogue apparatus according to claim 4, further comprising a dialogue candidate deletion unit configured to delete a dialogue candidate from the preference database wherein the dialogue candidate has the dialogue effect at or below a predetermined value among the dialogue candidates registered in the preference database.

6. A dialogue apparatus according to any one of claims 1 to 5, further comprising a service function unit configured to provide various service functions to the driver, wherein
the dialogue unit is configured to control a dialogue for improving the degree of concentration and a dialogue by a service function provided by the service function unit, and adjust the dialogues so that the dialogues are not provided at the same time.

7. A dialogue system configured to carry out a dialogue with a driver who is driving a vehicle, comprising:
a concentration degree measuring unit configured to measure a driver's degree of concentration on driving, at a vehicle side; and
a storage unit configured to maintain a preference database in which a dialogue candidate to be a candidate of content for a dialogue with the driver and a dialogue effect indicating a degree of improving the driver's degree of concentration on driving due to a dialogue by the dialogue candidate are associated with each other; and
a dialogue unit configured to select a dialogue candidate based on the dialogue effect in the preference database when the degree of concentration measured by the concentration degree measuring unit equipped to the vehicle side falls below a predetermined threshold, and then, carry out a dialogue by the selected dialogue candidate, and based on the degree of concentration before carrying out the dialogue and after carrying out the dialogue, calculate the dialogue effect of the dialogue, and update the dialogue effect of the preference database,
at a side of a server which is connected with the vehicle via a network.

8. A dialogue system according to claim 7, further comprising a service function unit configured to provide various service functions to the driver, wherein
the preference database records dialogue classifications and dialogue effects with respect to a plurality of dialogue candidates, and
the dialogue unit selects a dialogue classification according to an operating state of the service function unit, and selects a dialogue candidate from the dialogue classification based on the dialogue effect.

9. A dialogue system according to claim 7 or 8, wherein the dialogue unit selects the dialogue candidate by excluding a dialogue candidate used in a predetermined number of latest dialogues.

10. A dialogue system according to any one of claims 7 to 9, further comprising a dialogue candidate addition unit configured to add a dialogue candidate to the preference database wherein the dialogue candidate is selected based on a use behavior of the driver but is not registered in the preference database.

11. A dialogue system according to claim 10, further comprising a dialogue candidate deletion unit configured to delete a dialogue candidate from the preference database wherein the dialogue candidate has the dialogue effect at or below a predetermined value among the dialogue candidates registered in the preference database.

12. A dialogue system according to any one of claims 7 to 11, further comprising a service function unit configured to provide various service functions to the driver, wherein
the dialogue unit is configured to control a dialogue for improving the degree of concentration and a dialogue by a service function provided by the service function unit, and adjust the dialogues so that the dialogues are not provided at the same time.

13. A dialogue control method to be carried out in a dialogue apparatus configured to carry out a dialogue with a driver who is driving a vehicle, comprising:
maintaining a preference database in which a dialogue candidate to be a candidate of content for a dialogue with the driver and a dialogue effect indicating a degree of improving driver's degree of concentration on driving due to a dialogue by the dialogue candidate are associated with each other;
measuring the driver's degree of concentration on driving;
selecting a dialogue candidate based on the dialogue effect in the preference database when the degree of concentration falls below a predetermined threshold, and then, carrying out a dialogue by the selected dialogue candidate; and
calculating the dialogue effect of the dialogue based on the degree of concentration before carrying out the dialogue and after carrying out the dialogue, and updating the dialogue effect of the preference database.
